## Europäisches Patentamt

(19) ## European Patent Office

## Office européen des brevets

(11) Numéro de publication: **0 190 777**
**B1**

(12) # FASCICULE DE BREVET EUROPÉEN

(45) Date de publication du fascicule du brevet:
08.03.89

(51) Int. Cl.⁴: **A 01 D 31/00,** A 01 D 21/02,
A 01 D 15/04

(21) Numéro de dépôt: 86200045.2

(22) Date de dépôt: 10.01.86

(54) **Arracheuse.**

(30) Priorité: 14.01.85 BE 1011171

(43) Date de publication de la demande:
13.08.86 Bulletin 86/33

(45) Mention de la délivrance du brevet:
08.03.89 Bulletin 89/10

(84) Etats contractants désignés:
AT BE CH DE FR GB IT LI LU NL SE

(56) Documents cité:
AT-A-322 258
AT-A-356 958
DE-B-1 067 253
US-A-2 537 198

(73) Titulaire: **Stynen, Egidius Josephus Ludovicus,
Veerleseweg 28, B-2440 Geel (BE)**

(72) Inventeur: **Stynen, Egidius Josephus Ludovicus,
Veerleseweg 28, B-2440 Geel (BE)**

(74) Mandataire: **De Rycker, Rudolf, Ir., Vereenigde
Octrooibureaux Belgie S.A. Charlottalei 48,
B-2018 Antwerpen (BE)**

EP 0 190 777 B1

## Description

L'invention concerne une arracheuse, comprenant un châssis, au moins un soc monté sur ce châssis pour détacher et soulever une bande de terre contenant des plantes à arracher et au moins un nettoyeur pour séparer les plantes de la terre, ce nettoyeur comprenant un organe mobile situé en arrière du soc sur l'ensemble formé par le châssis et le soc et des moyens d'entraînement de cet organe mobile.

Les arracheuses de ce genre sont des machines du type arracheur-déterreur, c'est-à-dire des machines déterrant complétement la plante. Le soc ou couteau pénètre dans le sol en dessous des plantes et une bande de terre avec les plantes glisse sur le soc vers l'arrière où les plantes sont séparées de la terre.

De telles arracheuses peuvent être utilisées pour récolter aussi bien des pommes de terre que des betteraves, des chicorées ou endives ou d'autres plantes à racine ou à bulbe.

Une arracheuse de ce genre est connu de DE-A-1 067 253. Dans cette arracheuse, le nettoyeur comprend deux grilles de tamissage en forme d'un demi-tambour dont l'axe s'étend dans la direction longitudinale de l'arracheuse. Ces grilles situées l'une dernière l'autre sont oscillées en sens opposé autour de leur axe.

A cause des deux grilles oscillantes, la construction de cette arracheuse est relativement compliquée et la machine est donc onéreuse.

Etant donné qu'au cours du nettoyage les plantes à nettoyer roulent en va-et-vient sur les grilles le risque d'abîmer ces plantes est assez grand. Cette arracheuse n'est en pratique utilisable que pour des plantes qui ne sont pas très fragiles comme des pommes de terre ou des betteraves.

Pour certains sols, le nettoyage n'est pas toujours efficace.

Une autre arracheuse du genre en cause est décrite dans AT-B-322 258. Cette arracheuse comprend deux organes mobiles formés par des grilles pénétrant l'une dans l'autre. Ces grilles sont constituées par des barres inclinées vers le haut d'avant en arrière, sont fixées par des ressorts à un cadre et portent des doigts. Les deux grilles recoivent des mouvements en sens contraire en forme d'une ellipse.

Les grilles forment non seulement un organe nettoyeur mais également un élément transporteur entraînant les plantes arrachées.

A cause des deux grilles et des mécanismes d'entraînement nécessaires, la construction de cette arracheuse et également très compliquée et la machine est donc onéreuse.

En plus, le nettoyage n'est pas toujours efficace surtout pour certaines plantes comme des arbustes et comme dans la machine décrite ci-dessus les plantes peuvent être facilement abîmées par les barres ou les doigts des grilles.

L'invention a pour but de remédier à ces inconvénients et de procurer une arracheuse très simple et donc très économique permettant cependant un nettoyage efficace et sans danger d'abîmer les plantes.

Dans ce but, l'organe, mobile du nettoyeur comprend un élément disposé transversalement à la direction d'avancement et en forme barre relié par une liaison pivot dont l'axe de pivot s'étend dans la direction transversale à l'ensemble formé par le châssis et le soc à l'aide d'au moins deux bras latéraux, et en outre une ouverture, par laquelle des morceaux de terre peuvent tomber mais pas les plantes à arracher, est formée entre le soc et l'élément transversal en forme de barre, tandis que les moyens pour entraîner cet élément mobile sont des moyens pour pivoter l'ensemble formé par cet élément en forme de barre et les bras latéraux de manière à ce que cet élément puisse se déplacer en hauteur et frapper ainsi d'en dessous la bande de terre soulevée par le soc.

Dans une forme de réalisation particulière de l'invention, l'élément mobile en forme de barre et les bras latéraux font partie d'un cadre.

Dans une forme de réalisation efficace de l'invention, la distance entre l'élément mobile en forme de barre et l'axe de pivot est d'au moins huit centimètres.

D'autres avantages et particularités de l'invention ressortiront de la description d'une arracheuse selon l'invention, donnée ci-après à titre d'exemple non-limitatif et avec référence aux dessins annexés.

La figure 1 est une vue latérale d'une arracheuse selon l'invention.

La figure 2 est une vue d'en haut avec coupe partielle de l'arracheuse de la figure 1.

Dans les différentes figures, les mêmes chiffres de référence se rapportent à des éléments identiques.

L'arracheuse selon les figures comprend un châssis 1 destiné à être fixé au mécanisme de levage d'un tracteur agricole.

Un soc ou couteau 2, 3 en forme de U est fixé par ses bras 3 de manière détachable, par exemple à l'aide de boulons, au châssis 1, à l'avant de l'arracheuse vu dans le sens d'avancement de l'arracheuse, c'est-à-dire du côté du tracteur. Ce sens d'avancement est indiqué aux figures par la flèche 4. Le soc 2, 3 peut être situé aussi bien directement derrière qu'à côté du tracteur.

La partie 2 du soc 2, 3 située entre ses bras 3, descend vers l'avant. Lors de l'arrachage, le bord avant, c'est-à-dire le tranchant de cette partie 2 du soc 2, 3, se trouve dans le sol, en dessous des racines des plantes à arracher et le soc coupe et soulève une bande de terre comprenant les plantes à arracher.

La profondeur du tranchant de soc 2, 3 est déterminée par deux roues de guidage 5 qui roulent sur la surface du sol et qui sont montées dans des supports 6 fixés de part et d'autre du soc 2, 3 d'une manière réglable en hauteur au châssis 1.

Des doigts 7 sont fixés à l'aide de boulons 8 au bord arrière de la partie 2 du soc 2, 3 située entre ses bras.

Ces doigts 7 font saillie vers l'arrière et s'étendent dans une direction moins haute que le prolongement de la partie 2 du soc 2, 3.

Derrière le soc 2, 3 est monté un nettoyeur 9 séparant la terre des plantes arrachées.

Ce nettoyeur 9 comprend un cadre en métal qui est composé d'une barre arrière 10 s'étendant dans la direction transversale par rapport au sens d'avancement indiqué par la flèche 4, d'une barre avant 11 parallèle à la barre arrière 10 et de deux bras latéraux 12 reliant les deux barres 10 et 11.

Ce cadre 10 - 12 est relié à pivotement au bord arrière de la partie 2 du soc 2, 3 abstraction faite des doigts 7, à l'aide de deux petits axes 13, un de chaque côté latéral de l'arracheuse. Ces axes sont situés dans le prolongement l'un de l'autre et s'étendent parallèlement aux barres 10 et 11. Chaque axe 13 est logé dans un palier 14 fixé du côté correspondant de l'arracheuse à la face inférieure de la partie 2 du soc 2, 3 et pénètre dans un tube 15 fixé sur l'avant de la barre avant 11. Les paliers 14 sont situés de façon telle que la barre avant 11 du cadre 10 - 12 se trouve en dessous de la partie 2 du soc 2, 3.

La distance entre la partie arrière 11 et l'axe géométrique des axes 13 est d'au moins huit centimètres.

Le cadre 10 - 12 pivote en va-et-vient entre une position haute dans laquelle il se trouve encore sous le plan théorique prolongeant la partie 2 du soc 2, 3 et une position basse dans laquelle il se trouve encore au-dessus du sol, sous l'influence d'une roue à manivelle 16. Cette roue à manivelle 16 est fixée sur un axe 17 logé dans le châssis 1 et entraîné à l'aide d'une transmission, de construction connue pour l'homme de métier et non représentée aux dessins, par le mécanisme d'entraînement du tracteur agricole. Une bielle 10 de longueur réglable qui entoure à rotation la manivelle 19 de la roue 16 est fixée à charnière à un étrier 20 monté de manière déplaçable, mais blocable par un boulon 21, sur un bras de support 22 fixé par une extrémité à un des bras 12 du cadre 10 - 12. Le bras 22 s'étend essentiellement parallèlement au bras 12. L'ampleur du pivotement du cadre 10 - 12 peut être réglée en déplaçant l'étrier 20 le long du bras de support 22.

Entre les barres 10 et 11 du cadre 10 - 12 demeure une ouverture libre dont la largeur mesurée d'avant en arrière correspond à peu près à la largeur de l'ouverture 25 qui demeure entre la barre arrière 10 et le bord arrière de la partie 2 du soc 2, 3, abstraction faite des doigts 7. A travers cette ouverture 25 au moins une partie de la terre séparée des plantes peut tomber. La largeur maximale de l'ouverture 25 est telle que les plantes mêmes ne puissent tomber à travers celle-ci et dépend donc de la nature des plantes à arracher, de la nature du sol et également de la présence et de la longueur des doigts 7 fixés à la partie 2 du soc 2, 3.

La longeur de l'ouverture 25 susdite, parallèlement aux barres 10 et 11, est à peu près égale à la largeur, mesurée dans la même direction, de la partie 2 du soc 2, 3. Cette longueur de l'ouverture doit de préférence être à peu près égale à la largeur susdite de la partie 2. Si la largeur de la partie 2 n'excède pas vingt centimètres, cette longueur de l'ouverture 25 doit être située entre la largeur de la partie 2 plus quatre centimètres et cette largeur moins quatre centimètres.

La bande de terre avec les plantes qui est soulevée par le soc 2, 3 est déjà une première fois brisée lorsqu'elle passe de la partie 2 sur les doigts 7 qui font un angle avec la partie 2. Cette bande de terre est brisée plus fortement par la barre arrière 10 du cadre 10 - 12 qui frappe la bande par dessous à chaque mouvement vers le haut du cadre 10 - 12. Au moins une partie de la terre brisée et séparée des plantes tombe à travers l'ouverture du cadre 10 - 12 et les plantes libérées sont poussées plus loin vers l'arrière et tombent sur le sol ou éventuellement sur un transporteur monté derrière le nettoyeur 9.

La séparation des plantes de la terre peut être poursuivie au-dessus des doigts 23 qui sont fixés par des boulons 24 sur la poutre arrière 10. Ces doigts 23 font saillie vers l'arrière dans le prolongement du plan du cadre 10 - 12.

La construction de cette arracheuse est très simple et très économique. Elle peut être utilisée sur différents sols (lourds ou légers, secs ou humides) et pour récolter différentes plantes comme des bulbes, des tubercules, des racines, des rosiers ou de petits arbres. Selon la nature du sol et des plantes à arracher il peut être nécessaire d'enlever les doigts 7 et/ou les doigts 23 et/ou de remplacer les doigts 7 ou 23 par des doigts faisant un autre angle avec la partie 2 du soc 2, 3 ou du cadre 10 - 12 respectivement, et/ou de changer le soc 2, 3 ou de modifier la largeur de l'ouverture entre le soc 2 - 3 et la barre arrière 10 du cadre 10 - 12, par exemple en montant un prolongement sur la partie 2 du soc 2, 3.

Dans une variante, la largeur du cadre même peut être réglable, par exemple en montant la barre arrière 10 de manière réglable sur les bras 12.

Il est entendu que l'invention n'est nullement limitée à la forme de réalisation décrite ci-avant et que bien des modifications peuvent y être apportées sans sortir du cadre de la présente demande de brevet.

En particulier, l'arracheuse ne doit pas nécessairement comprendre un seul soc et un seul cadre mobile monté derrière ce soc. Elle peut comprendre plusieurs socs, par exemple un par rangée ou paire de rangées de plantes, avec un seul cadre en tout ou un ou plusieurs cadres par soc. Même avec un seul soc, elle peut comprendre plusieurs cadres mobiles. En particulier elle peut comprendre deux cadres qui sont déplacés en sens contraire en hauteur de manière à équilibrer la machine. Elle peut aussi comprendre plusieurs cadres montés l'un derrière l'autre vu dans son sens d'avancement.

Si l'arracheuse comprend plusieurs cadres l'un à côté de l'autre, la longueur de l'ouverture de chaque cadre, mesurée parallèlement à la barre arrière de chaque cadre doit de préférence être supérieure à vingt centimètres.

Le cadre peut aussi être divisé par une ou plusieurs traverses s'étendant perpendiculairement à la poutre arrière. Ces traverses doivent être situées à au moins vingt centimètres l'une de l'autre.

Le cadre peut aussi être prolongé vers l'arrière par une autre poutre fixée à une distance derrière la poutre arrière.

L'élément mobile ne doit pas nécessairement être un cadre. Il peut être en forme de U ou limité à la barre arrière. Dans ce dernier cas un guidage pour cette barre doit être prévu.

Les moyens pour faire pivoter le cadre ne doivent pas nécessairement être construits comme décrit. L'extrémité inférieure de la bielle peut par exemple être fixée à rotation dans un trou d'une série de trous aménagés dans une plaque fixée au cadre. Des moyens peuvent être prévus de chaque côté du cadre. Le mouvement des deux roues à manivelle doit évidemment être synchronisé.

Une décolleteur peut être monté sur le châssis, devant le soc.

Les doigts sur le soc ou sur le cadre doivent être dirigés vers l'arrière mais pas nécessairement sous l'angle mentionné.

L'arracheuse ne doit pas nécessairement être pourvue de roues de guidage.

L'arracheuse ne doit pas nécessairement être montée sur un tracteur agricole. Elle peut être complètement autonome.

## Revendications

1. Arracheuse, comprenant un châssis (1), au moins un soc (2, 3) monté sur ce châssis (1) pour détacher et soulever une bande de terre contenant des plantes à arracher et au moins un nettoyeur (9) pour séparer les plantes de la terre, ce nettoyeur (9) comprenant un organe mobile (10) situé en arrière du soc (2, 3) sur l'ensemble formé par le châssis (1) et le soc (2, 3) et des moyens d'entraînement (16 - 22) de cet organe mobile, caractérisée en ce que l'organe mobile (10) du nettoueur (9) comprend un élément disposé transversalement à la direction d'avancement et en forme de barre relié par une liaison pivot dont l'axe de pivot s'étend dans la direction transversale à l'ensemble formé par le châssis (1) et le soc (2, 3) à l'aide d'au moins deux bras latéraux (12) et ce qu'une ouverture (25), par laquelle des morceaux de terre peuvent tomber mais pas les plantes à arracher, est formée entre le soc (2, 3) et l'élément transversal (10) en forme de barre et en ce que les moyens (16 -22) pour entraîner cet élément mobile (10) sont des moyens pour pivoter l'ensemble formé par cet élément (10) en forme de barre et les bras latéraux de manière à ce que cet élément (10) se déplace en hauteur et puisse frapper ainsi d'en dessous la bande de terre soulevée par le soc (2, 3).

2. Arracheuse selon la revendication 1, caractérisée en ce que l'élément mobile en forme de barre (10) et les bras latéraux (12) font partie d'un cadre (10, 11, 12).

3. Arracheuse selon la revendication 2, caractérisée en ce que le côté avant (11) du cadre (10, 11, 12) est situé en dessous du soc (2, 3) près du bord arrière de celui-ci.

4. Arracheuse selon l'une ou l'autre des revendications 1 à 3, caractérisée en ce que la distance entre l'élément mobile en forme de barre (10) et l'axe de pivot est d'au moins huit centimètres.

5. Arracheuse selon l'une ou l'autre des revendications 1 à 4, caractérisée en ce qu'elle comprend des doigts (7) montés sur le soc (2, 3) et faisant saillie vers l'arrière.

6. Arracheuse selon la revendication 5, caractérisée en ce que le soc (2, 3) comprend une partie (2) centrale active, inclinée vers le haut d'avant en arrière et en ce que les doigts (7) s'étendent vers l'arrière dans une direction moins haute que le prolongement de la face supérieure de la partie centrale (2) du soc (2, 3).

7. Arracheuse selon l'une ou l'autre des revendications 1 à 6, caractérisée en ce qu'elle comprend des doigts (23) fixés sur l'élément mobile (10) et s'étendant vers l'arrière.

## Patentansprüche

1. Roder, umfaßend ein Gestell (1), mindestens eine auf diesem Gestell (1) montierte Pflugschar (2, 3), zum Losreißen und Aufheben einer zu rodende Pflanzen enthaltenden Erdestreife, und mindestens eine Reinigungsvorrichtung (9), zum Scheiden der Pflanzen von der Erde wobei diese Reinigungsvorrichtung (9) ein hinterhalb der Pflugschar (2, 3) auf dem vom Gestell (1) und der Pflugschar (2, 3) gebildeten Gesamt befindliches bewegliches Organ (10) und Antriebmittel (16 - 22) für dieses bewegliche Organ umfaßt, dadurch gekennzeichnet, daß das bewegliche Organ (10) der Reinigungsvorrichtung (9) ein über eine Drehverbindung, deren Drehachse sich mittels mindestens zwei Seitenarme in der Querrichtung im Verhältnis zum vom Gestell (1) und der Pflugschar (2, 3) gebildeten Gesamt ausstreckt, quer zur Vorschubrichtung angebrachtes stangenförmiges Element umfaßt, daß eine Öffnung (25), wodurch Erdeklumpen, jedoch nicht die zu rodenden Pflanzen, herausfallen können, zwischen der Pflugschar (2, 3) und dem stangenförmigen Querelement (10) gebildet ist und daß die Mittel (16 - 22) zum Antrieb dieses beweglichen Elements (10) Mittel sind um das von diesem stangenförmigen Element (10) und den Seitenarmen gebildete Gesamt so drehen zu lassen, daß sich dieses Element (10) in der Höhe verstellt und es die von der Pflugschar (2, 3) aufgehobene Erdestreife also von unten aus schlagen kann.

2. Roder nach Anspruch 1, dadurch gekennzeichnet, daß das stangenförmige bewegliche Element (10) und die Seitenarme (12) Teil eines Rahmens (10, 11, 12) sind.

3. Roder nach Anspruch 2, dadurch gekennzeichnet, daß sich die Vorderseite (11) des Rahmens (10, 11, 12) unter der Pflugschar (2, 3), nahe an deren Hinterrand, befindet.

4. Roder nach irgendwelchem der Ansprüche 1 bis 3, dadurch gekennzeichnet, daß der Abstand zwischen dem stangenförmigen beweglichen Element (10) und der Drehachse mindestens acht Zentimeter beträgt.

5. Roder nach irgendwelchem der Ansprüche 1 bis 4, dadurch gekennzeichnet, daß er auf der Pflugschar (2, 3) montierte, nach hinten aussteckende Finger (7) umfaßt.

6. Roder nach Anspruch 5, dadurch gekennzeichnet, daß die Pflugschar (2, 3) einen von vorne nach hinten, nach oben geneigten aktiven Zentralteil (2) umfaßt und daß sich die Finger (7) nach hinten, in einer Richtung, welche weniger hoch als die Verlängerung der Oberfläche des Zentralteils (2) der Pflugschar (2, 3) ist, ausstrecken.

7. Roder nach irgendwelchem der Ansprüche 1 bis 6, dadurch gekennzeichnet, daß er am beweglichen Element (10) befestigte und sich nach hinten ausstreckende Finger (23) umfaßt.

## Claims

1. Digger, comprising an underframe (1), at least one share (2, 3) mounted onto this underframe (1) to separate and lift a stroke of earth containing plants to be digged and at least one cleaner (9) to separate the plants from the earth, this cleaner (9) comprising a mobile organ (10) located behind the share (2, 3) on the aggregate formed by the underf rame (1) and the share (2, 3) and driving means (16 - 22) for this mobile organ, characterized in that the mobile organ (10) of the cleaner (9) comprises a bar-shaped element placed transversally to the advancing direction, connected by means of a pivot connection the pivot axis of which extends transversally to the aggregate formed by the underframe (1) and the share (2, 3) by means of at least two side-arms (12), in that an opening (25) through which lumps of earth can drop, but not the plants to be digged, is formed between the share (2, 3) and the bar-shaped, transversal element (10) and in that the means (16 - 22) for driving this mobile element (10) are means for pivoting the whole provided by that bar shaped element (10) and the side-arms, so that this element (10) moves in height and so can beat from underneath the strip of earth lifted by the share (2, 3).

2. Digger according to claim 1, characterized in that the bar-shaped mobile element (10) and the side-arms (12) are part of a frame (10, 11, 12).

3. Digger according to claim 2, characterized in that the front side (11) of the frame (10, 11, 12) is located under the share (2, 3), close to the rear rim of same.

4. Digger according to any one of claims 1 to 3, characterized in that the distance between the barshaped mobile element (10) and the pivot axis is at least eight centimeters.

5. Digger according to any one of claims 1 to 4, characterized in that it comprises fingers (7) mounted onto the share (2, 3) and projecting rearwards.

6. Digger according to claim 5, characterized in that the share (2, 3) comprises an active central part (2), slanting upwards from the front to the rear and in that the fingers (7) extend rearwards in a direction less high than the extension of the upper face of the central part (2) of the share (2, 3).

7. Digger according to any one of claims 1 to 6, characterized in that it comprises fingers (23) secured onto the mobile element (10) and extending rearwards.